# EUROPEAN PATENT APPLICATION

(11) **EP 1 809 005 A2**
(43) Date of publication of application: **18.07.2007**
(21) Application number: 06124893.6
(22) Date of filing: 28.11.2006
(51) Int. Cl.: H04L 29/12, H04L 29/06, H04L 12/24

(54) **Remote access to local network**

(30) Priority: 16.01.2006 WO PCT/IB2006/000066
(71) Applicant: Nokia Corporation, 02150 Espoo (FI)
(72) Inventor: Costa-Requana, Jose, 00990 Helsinki (FI); Stirbu, Vlad, 33820 Tampere (FI); Salmenkaita, Jukka-Pekka, 00370 Helsinki (FI)
(74) Representative: Cohausz & Florack

(57) **Abstract**

For enabling a remote access to a local network via a remote access device of the local network, a mobile device of the local network assembles and provides configuration settings for the remote access. The remote access device receives the configuration settings from the mobile device and enables a remote access to the local network via the remote access device using these configuration settings.

## Description

### FIELD OF THE INVENTION

The invention relates to a remote access to a local network. The invention relates more specifically to methods, chipsets, mobile devices, remote access devices, software program products and systems enabling a remote access to a local network via a remote access device of the local network. The invention relates equally to a method, a mobile device, a remote access device, a dynamic domain name system service server, a system and a software program product supporting a configuration of a dynamic domain name system service at a remote access device of a local area network.

### BACKGROUND OF THE INVENTION

Local networks can be established for interconnecting several devices in order to enable an interaction between these devices.

The UPnP™ (Universal Plug and Play) technology defines an architecture for pervasive peer-to-peer network connectivity of intelligent appliances, wireless devices, PCs (personal computers), etc. It is designed to bring easy-to-use, flexible, standards-based connectivity to ad-hoc or unmanaged networks at home, in a small business, in public spaces, or attached to the Internet, etc. UPnP™ technology provides a distributed, open networking architecture that leverages TCP/IP (Transmission Control Protocol/Internet Protocol) and the Web technologies to enable as well seamless proximity networking as controlling and effecting a data transfer among networked devices.

The UPnP™ Device Architecture (UDA) is designed to support zero-configuration, 'invisible' networking, and automatic discovery for a breadth of device categories from a wide range of vendors. This means a device can dynamically join a network, obtain an IP address, convey its capabilities, and learn about the presence and capabilities of other devices.

An established local network may also comprise a gateway or another connecting component, which enables a communication with external devices, for instance via the Internet.

All existing gateway functionality is targeted to allow connectivity from within the local network to outside services, for instance web access, services provided by content providers, etc.

The remote access in existing UPnP™ and DLNA (Digital Living Network Alliance) forum is targeted on enabling an access to a local network by external devices. The UPnP™ Remote Access Task Force is defining how remote devices can access a local network in such a way that they appear to the network devices as if they were a part of the UPnP™ local network. The remote access is using VPN (Virtual Private Network) as the underlying technology.

In order to enable a remote access to a local network via the Internet, the local network has to be provided with an IP address.

Shortage of available public IP addresses does not allow all devices to have their own IP address, though. In order to overcome this problem, Internet Service Providers (ISP) dynamically allocate an public IP address from their own address pool to devices that are connected at that time to the Internet.

For enabling a remote access to a local network, an ISP will thus dynamically allocate an IP address to the gateway or another remote access device of the local network. In order to be able to connect to the local network, a remote device must have prior knowledge of the public IP address of the gateway, which is not an easy task in view of the varying IP addresses.

The Dynamic Domain Name System (DynDNS) is a system facilitating this task, as it allows a fixed Internet domain name to be assigned to varying IP addresses. A Dynamic DNS server takes care of the mapping between a Fully Qualified Domain Name (FQDN) and a dynamic IP address. This makes it possible for other sites on the Internet to establish connections to a machine having a dynamic IP address, for example a cable or DSL (Digital Subscriber Line) service where the IP address of the modem is changed by the Internet service provider occasionally, without having to track the IP address themselves. To implement dynamic DNS, it is necessary to set the maximum caching time of the domain to an unusually short period of typically a few minutes. This prevents other sites on the Internet from retaining the old address in their cache, so that they will typically contact the DynDNS server of the domain for each new connection.

When a local network makes use of a DynDNS service, also a remote device trying to access the local network via a gateway is thus not required to know the actual IP address but only the FQDN of the gateway.

In order to use DynDNS in a local network, it is necessary to configure DynDNS parameters in the gateway. Such a configuration has to indicate, for example, which DynDNS server has to be informed about changes in the IP address.

However, there are no conventional generic mechanisms to configure DynDNS parameters in such a gateway. Currently, each service provider offers its own proprietary client that can be used for taking care of the updating. Due to the lack of standards in the DynDNS space, it is rather complicated for an average user to configure his/her home gateway with the DynDNS settings.

The existing IGDs (Internet Gateway Devices) support a service that enables a configuration of a WLAN (Wireless Local Access Network), but it does not include actions for triggering the registration of a local network gateway into an external server or DynDNS service that will allow the gateway to be accessible from outside using public addresses.

The Cable Television Laboratories, Inc., have introduced a new gateway device functionality in their CableHome 1.1 Specification CH-SP-CH1.1-I10-051214, December 14, 2005, which includes an IGD functionality for interacting with UPnP™ devices.

Still, also this IGD does not provide a service for initiating the registration in external servers.

Moreover, it does not provide a security mechanism that will allow a device to access the gateway when being at a remote location.

### SUMMARY OF THE INVENTION

It is an object of the invention to facilitate and improve a remote access to a local network.

A first method for enabling a remote access to a local network via a remote access device of the local network is proposed. The method comprises at the remote access device receiving from a mobile device of the local network configuration settings for a remote access to the local network. The method further comprises at the remote access device enabling a remote access to the local network via the remote access device using the configuration settings.

Moreover, a chipset for a remote access device enabling a remote access to a local network is proposed. The chipset comprises at least one chip, and the at least one chip includes a remote access configuration component. The remote access configuration component is adapted to receive from a mobile device of the local network configuration settings for a remote access to the local network. The remote access configuration component is further adapted to enable a remote access to the local network via the remote access device using the configuration settings.

Moreover, a remote access device enabling a remote access to a local network is proposed. The remote access device comprises a remote access configuration component, which is adapted to realize the same functions as the remote access configuration component of the proposed chipset. It has to be noted, however, that this remote access configuration component can be realized in hardware and/or in software. It could be realized for instance by a software code that is executed by a processor of the remote access device. Alternatively, it could be realized for instance by a circuit that is integrated in a chip.

The remote access device could be for instance an IGD or another gateway device.

Moreover, a first software program product is proposed, in which a software code for enabling a remote access to a local network via a remote access device of the local network is stored in a readable medium. When being executed by a processor of the remote access device, the software code realizes the first proposed method. The software program product can be for instance an autonomous memory device or a memory component that can be implemented in a remote access device.

Moreover, a second method for enabling a remote access to a local network via a remote access device of the local network is proposed. The method comprises at a mobile device of the local network assembling configuration settings for a remote access to the local network and providing the configuration settings to the remote access device.

Moreover, a chipset for a mobile device enabling a remote access to a local network via a remote access device of the local network is proposed. The chipset comprises at least one chip, and the at least one chip includes a remote access control component. The remote access control component is adapted to assemble configuration settings for a remote access to the local networks The remote access control component is further adapted to provide the configuration settings to the remote access device.

Moreover, a mobile device enabling a remote access to a local network via a remote access device of the local network is proposed. The mobile device comprises a remote access control component, which is adapted to realize the same functions as the remote control component of the proposed chipset. It has to be noted, however, that this remote control component can be realized in hardware and/or in software. It could be realized for instance by a software code that is executed by a processor of the remote access device. Alternatively, it could be realized for instance by a circuit that is integrated in a chip.

The mobile device can be any kind of mobile device that is suited to for a part of a local network, for instance a mobile phone, a laptop, a PDA (personal digital assistant), etc.

Moreover, a second software program product is proposed, in which a software code for enabling a remote access to a local network via a remote access device of the local network is stored in a readable medium. When being executed by a processor of a mobile device, the software code realizes the second proposed method. The software program product can be again for instance an autonomous memory device or a memory component that can be implemented in a remote access device.

Finally, a system enabling a remote access to a local network is proposed, which comprises the proposed remote access device and the proposed mobile device.

The invention proceeds from the consideration that a mobile device of a local network can be used for providing configuration settings to a remote access device of a local network.

It is an advantage of the invention that it enables a convenient configuration of the remote access device and of services that are related to a remote access.

The configuration settings can be assembled at the mobile device from various sources. They can be available in the mobile device and/or be based on a user input and/or they be provided by an external server, etc.

In one embodiment of the invention, a remote access is to be enabled via an external internet protocol based network, for instance the Internet. The configuration settings may comprise in this case configuration information for a dynamic DNS. The configuration information may enable the remote access device to update a DNS entry in a DynDNS server whenever an allocated external internet protocol address of the remote access device is changing.

The configuration information may be obtained by the mobile device from this DynDNS server, for instance making use of a wizard, that is, an interactive computer program, for informing the server about a desired domain name, etc. The wizard may be provided by the DynDNS server or be implemented in the mobile device.

The obtained configuration information may be included for example, though not necessarily, in an XML (eXtensible Mark-up Language) file. The file may comprise for instance a user selected DNS name, a link to the server, a username and a password enabling the remote control device to take care of the updates. In addition, policy information of the DynDNS server may be provided that should be taken into account by the remote access device.

In general, the configuration settings may comprise various types of settings. They may include for example settings for a registration of the remote access device at an external server, like a DynDNS server, settings for an activation of the remote access, settings for a registration of the mobile device for the remote access, a list of devices of the local network to which the remote access by the mobile device is to be enabled, and settings for a security policy that is to be obeyed for the remote access.

It is thus an advantage of the invention, that the configuration settings can be employed by a user for indicating security information and for activating the remote access while the mobile device belongs to the local network, for example a home network. This provides an appropriate security, since only the mobile device at home is able to initiate a registration, and the registration may further ensure that only this device will be allowed to access the local network remotely.

Upon receipt of configuration settings, the remote access device may transmit security credentials to the mobile device. Any device that is able to present these security credentials later on may then qualify for a remote access to the local network.

The remote access device may set up a remote connection in accordance with received configuration settings between a device requesting a remote access and the local network. If security credentials have been provided to the mobile device, the remote connection is only set up in case the request includes these security credentials, which qualify the requesting device for a remote access.

The requesting device can be the mobile device itself. It has to be noted, though, that it could equally be a device authorized by the mobile device to request the remote access. The authorization can be achieved for instance by providing the requesting device with security credentials. Such a requesting device could be for instance a device of another local network, which is visited by the mobile device as a guest device.

The existing IGD, for example, does not include any functionality allowing guest mobile devices in a visited local network to configure the connectivity between the visited local network and a home local network, to enable a mobile device to control its local network from a visitor network, or to enable a content transfer between a local network and a third device located in a visited network.

In order to ensure a secure connection for a remote access, the remote access device may use for instance VPN/SSL (Secure Sockets Layer) and/or VPN/IPSEc (Internet security) tunneling for the remote access.

The remote access device may also provide a basic filtering functionality. Such functionality can be used for preventing signals from devices of the local network, which are not registered for a remote access, from leaving the local network during a remote access. Thus, the filtering functionality is able to filter messages from non authorized devices in the local network in order to prevent that these are visible remotely.

The filtering functionality can be implemented for instance in the scope of a firewall functionality of a device or in the scope of a control point functionality of a device. For example, a gateway could be implemented to act as a UPnP™ device of a local network and as a control point, the latter being adapted to take care of the filtering.

The invention can be used for example as a basis for a new service or for SCPD (Service Control Protocol Description) specifications. The service or the specifications may allow a mobile device or a Control Point to inform the remote access device about the settings that can be used by the remote access device to find an external server, like a DynDNS server. In addition, the service or the specifications may allow a mobile device or a Control Point to register for enabling an access to the local network by means of the mobile device even when the mobile device is located at a remote place. The service or the specifications may include a management of settings, of a security policy and of security credentials. This information can be used by an external server and/or the remote access device for enabling the secure access to the local network through the remote access device.

The security settings may include for example information about a server that will provide the identities of mobile devices and the security information that will be used for allowing the mobile devices to access a local network remotely.

The remote access device may be for instance a standalone device including a corresponding SCPD protocol and a FW (Firewall)/NAT (Network Address Translation) functionality.

The SCPD may include a remote access configuration service for mobile terminated connectivity but also the actions to trigger the connectivity between the remote access device in the local network and another remote access device in a local network visited by the mobile device.

The service can be part of an IGD or it can be included in a similar device acting as a remote access device. The service may consists of few actions with the appropriate parameters including the registration settings and security parameters for allowing the remote access device or IGD to register at an external server. The parameters may further indicate the security information that has to be used for enabling the secure access.

The local network can be for example, though not exclusively, a UPnP™ network or a peer-to-peer network, like a Kazaa network or a eDonkey network. It can further be for example a home network or a business network, etc.

If the local network is a UPnP™ network, the invention can be used for instance for a UPnP™ SCPD that defines the service to enable remote access to UPnP™ local networks. The remote access device may then include for example the proposed SCPD, Control Point functionality, a Firewall/Nat functionality and connectivity with third party services for acquiring public connectivity.

Specifically for the aspect of a DynDNS configuration, moreover a method for supporting a configuration of a DynDNS service at a remote access device of a local area network is proposed. The method comprises at a mobile device obtaining DynDNS configuration information from a DynDNS server. The method further comprises at this mobile device providing the configuration information as an input for a configuration of a DynDNS service at the remote access device.

For the DynDNS configuration aspect, moreover a mobile device supporting a configuration of a DynDNS service at a remote access device of a local area network is proposed. The mobile device comprises a configuration creation component, which is adapted to obtain DynDNS configuration information from a DynDNS server. The remote access control component is further adapted to provide this configuration information as an input for a configuration of a DynDNS service at the remote access device.

For the DynDNS configuration aspect, moreover a DynDNS server supporting a configuration of a DynDNS service at a remote access device of a local area network is proposed. The DynDNS server comprises a configuration creation component adapted to assemble DynDNS configuration information for the remote access device upon a request by a mobile device. The configuration creation component is further adapted to provide the assembled DynDNS configuration information to this mobile device.

For the DynDNS configuration aspect, moreover a remote access device enabling a remote access to a local network is proposed. The remote access device supports a configuration of a DynDNS service at the remote access device. The remote access device comprises a configuration creation component adapted to obtain DynDNS configuration information from a mobile device of the local network. The configuration creation component is further adapted to carry out a configuration of a DynDNS service at the remote access device based on the obtained DynDNS configuration information.

For the DynDNS configuration aspect, moreover a system comprising a remote access device of a local area network and a mobile device supporting a configuration of a dynamic domain name system service at this remote access device is proposed. The mobile device may correspond to the mobile device proposed for the DynDNS configuration aspect. The system may further comprise for instance the DynDNS server and/or the entire local network.

For the DynDNS configuration aspect, finally a software program product is proposed, in which a software code for supporting a configuration of a DynDNS service at a remote access device of a local area network is stored in a readable medium. When being executed by a processor of a mobile device of the local network, the software code realizes the method proposed specifically for a DynDNS configuration.

The DynDNS aspect of the invention provides an improved usability of a DynDNS service, since it enables a user of a mobile device to configure its remote access to a local network with DynDNS parameters. Further, it enables the remote access device to interoperate with compatible DynDNS servers, for example servers of providers that are supporting the DynDNS configuration.

The DynDNS aspect of the invention is also suited to hide the DynDNS implementation from the user. For example, if the DynDNS server provides a wizard to the mobile device for supporting a retrieval of DynDNS configuration information, the user just has to go through the wizard and then to input this information into the remote access device.

It is to be understood that any of the embodiments presented for the general aspect of a remote access configuration can be used for, combined with or adapted to the proposed specific DynDNS configuration as well.

In order to enable a remote access to a first local network specifically via a second local network, a further method is proposed. This method comprises at a remote access device of the second local network receiving configuration settings from a mobile device that is associated to the first local network. The method further comprises at a remote access device of the second local network setting-up a connection to a remote access device of the first local network using the configuration settings.

Moreover, a remote access device of a first local network enabling a remote access to a second local network is proposed. The remote access device of the first local network comprises a remote access configuration component. The remote access configuration component is adapted to receive configuration settings from a mobile device associated to the second local network. The remote access configuration component is further adapted to enable a set-up of a connection to a remote device of the second local network using the configuration settings.

Moreover, a mobile device enabling a remote access to a first local network is proposed. The mobile device is associated to the first local network and the mobile device comprises a remote access control component. This remote access control component is adapted to assemble configuration settings enabling a remote access device of a second local network to set-up a connection to a remote access device of the first local network. This remote access control component is further adapted to provide the configuration settings to a remote access device of a second local network.

Moreover, a system enabling a remote access to a first local network is proposed. This system comprises a remote access device of a second local network and a mobile device. The remote access device of the second local network comprises a remote access configuration component adapted to receive from the mobile device configuration settings, and adapted to enable a set-up of a connection to a remote device of the first local network using the configuration settings. The mobile device is associated to the first local network and comprises a remote access control component adapted to provide configuration settings for a remote access to the first local network to the remote access device of the second local network.

Moreover, another system enabling a remote access to a first local network is proposed. This system comprises a remote access device of the first local network and a remote access device of a second local network. The remote access device of the second local network comprises a remote access configuration component adapted to receive from a mobile device associated to the first local network configuration settings, and adapted to enable a set-up of a connection to a remote device of the first local network using the configuration settings.

Moreover, a software program product is proposed, in which a software code for enabling a remote access to a first local network is stored in a readable medium. When being executed by a processor of a remote access device of a second local network, the software code realizes the method that is proposed to enable a remote access to a first local network via a second local network.

This last aspect of the invention can be used for instance for configuring a gateway of a network to access remotely the gateway of another network. The idea is again to use a mobile device to configure a remote access device for a remote access. In this case, however, a remote access device is configured to contact the remote access device of another local network to bridge the two networks. The bridging functionality between the two remote access devices enables a seamless transfer of application messages over a connection created between the two remote access devices. Thereby, it allows as well accessing the devices in the other local network via the connection, which may be for example a tunnel. In addition to configuration settings, the mobile device may provide for example security information from the remote access device of the other local network.

It is to be understood that it is not required that the mobile device provides the configuration settings directly to the remote access device. Instead, the configuration settings could reach the remote access device for instance via any other device that belongs to the same local network as the remote access device.

It is to be understood that any of the embodiments presented for the general aspect of a remote access configuration or for the DynDNS configuration aspect can be used for, combined with or adapted to the proposed enablement of a remote access to a first local network via a second local network.

Other objects and features of the present invention will become apparent from the following detailed description considered in conjunction with the accompanying drawings. It is to be understood, however, that the drawings are designed solely for purposes of illustration and not as a definition of the limits of the invention, for which reference should be made to the appended claims. It should be further understood that the drawings are not drawn to scale and that they are merely intended to conceptually illustrate the structures and procedures described herein.

### BRIEF DESCRIPTION OF THE FIGURES

- Fig. 1: is a schematic block diagram of a system according to an embodiment of the invention;
- Fig. 2: is a schematic diagram illustrating possible arrangements of a DynDNS server in the system of Figure 1;
- Fig. 3: is a diagram illustrating a first exemplary operation in the system of Figure 1;
- Fig. 4: is a diagram illustrating a second exemplary operation in the system of Figure 1; and
- Fig. 5: is a diagram illustrating a third exemplary operation in the system of Figure 1.

### DETAILED DESCRIPTION OF THE INVENTION

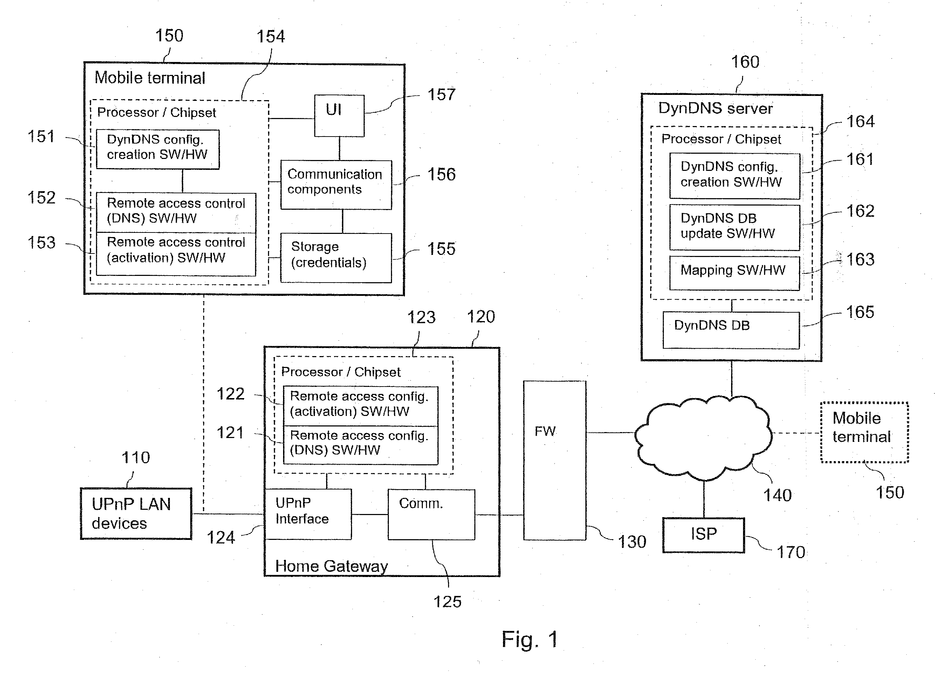

Figure 1 is a schematic block diagram of an exemplary system in which embodiments of the invention may be implemented.

The system comprises a home network including a plurality of devices 110. The home network may be for example an UPnP™ local network. The home network is linked via a home gateway 120 and a firewall (FW) 130 to the Internet 140. It is understood that home gateway 120 and firewall 130 may be integrated in a single device, like a server. A mobile terminal 150 may form a part of the home network, but its user may equally desire occasionally to access the home network by means of the mobile terminal 150 via the Internet 140. A DynDNS server 160 and an ISP server 170 are also connected to the Internet 140.

Any of the presented devices 110, 120, 130, 150, 160, 170 may be implemented in a conventional manner, except for some details that will be described in the following.

The home gateway 120 comprises a remote access configuration component 121 for a DynDNS configuration and a remote access configuration component 122 for a general remote access configuration. The functions of these components 121, 122 may be implemented in hardware and/or software. A processor 123 may execute for instance corresponding software code components. Such a processor 123 could also execute software code components that are provided for other functions of the home gateway 120 or of a device comprising the home gateway 120. Alternatively, some or all of the functions of the components 121, 122 could be integrated for instance in a chip or chipset. The home gateway 120 further comprises an interface 124 for the home network, which provides UPnP™ device functionality so that the home gateway 120 may form a part of the home network. The home gateway 120 further comprises a communication component 125 enabling a data exchange with the Internet 140.

The mobile terminal 150 comprises a DynDNS configuration creation component 151, a remote access control component 152 for a DynDNS control that is linked to the DNS configuration creation component 151, and a remote access control component 153 for a general control of a remote access. The functions of these components 151, 152, 153 may be implemented in hardware and/or software. A processor 154 may execute for instance corresponding software code components. Such a processor 154 could also execute software code components that are provided for other functions of the mobile terminal 150. Alternatively, some or all of the functions of the components 151, 152, 153 could be integrated for instance in a chip or chipset. The mobile terminal 150 further comprises a storage 155 that is linked to the remote access control 153. The mobile terminal 150 further comprises communication components 156 that are linked to the storage 155, to the DynDNS configuration creation component and to the remote access control components 152, 153. The communication components 156 may enable different kinds of communications with other devices, like a mobile communication, a WLAN based communication, a Bluetooth™ based communication, etc. Finally, the mobile terminal comprises user input means 157 that are linked to all components of the mobile terminal 150 that allow a user input.

The DynDNS server 160 comprises a DynDNS configuration creation component 161, a DynDNS database (DB) updating component 162 and a mapping component 163. The functions of these components 161, 162, 163 may be implemented in hardware and/or software. A processor 164 may execute for instance corresponding software code components. Such a processor 164 could also execute software code components that are provided for other functions of the DynDNS server 160. Alternatively, some or all of the functions of the components 161, 162, 163 could be integrated for instance in a chip or chipset. Further, the DynDNS server 160 comprises a DynDNS database (DB) 165 that is linked to the DynDNS DB updating component 162 and to the mapping component 163.

It is to be understood that the depicted components of the presented system are only intended to illustrate the principle functions that are implemented in the system. A practical implementation could proceed for example from the above cited CableHome 1.1 Specification.

While the DynDNS server 160 is presented in Figure 1 as a separate device, it has to be noted that its functions could equally be integrated in another device.

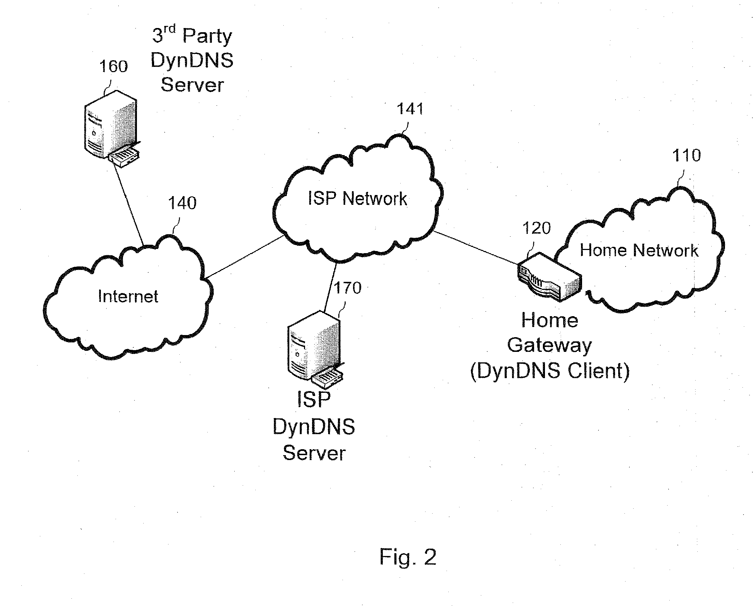

This is illustrated in Figure 2. In Figure 2, the home gateway 120 connects the home network via an ISP network 141 managed by the ISP server 170 to the Internet 140. The ISP server 170 is responsible for allocating dynamically an IP address to the home gateway 120. A DynDNS server 160 connected to the Internet 140 may provide DynDNS services to the home gateway 120.

DynDNS services are provided on a large scale by various organizations, which retain the current IP addresses of subscribed machines in a database and enable users to update them as required. Some 'client' programs will, when installed on a machine, operate in the background and check the IP address of the machine periodically. If it has changed, then it will send an update request to the DynDNS service. Many routers and other networking components, like home gateways, contain such a feature in their firmware. Currently there are several 3rd party service providers that are offering a DynDNS service for free or for a small fee.

Alternatively, however, the ISP server 170 itself could offer corresponding DynDNS services as a part of a subscription.

In the following, some operations in the system of Figure 1 will be described, which relate to a remote access of the mobile terminal 150 to devices 110 of the home network. It is to be understood that any user input that will be indicated is entered in the mobile terminal 150 via the user input means 157. Further, it is to be understood that the mobile terminal 150 accesses the home gateway 120, the Internet 140 or any other device via a suitable one of the communication components 156.

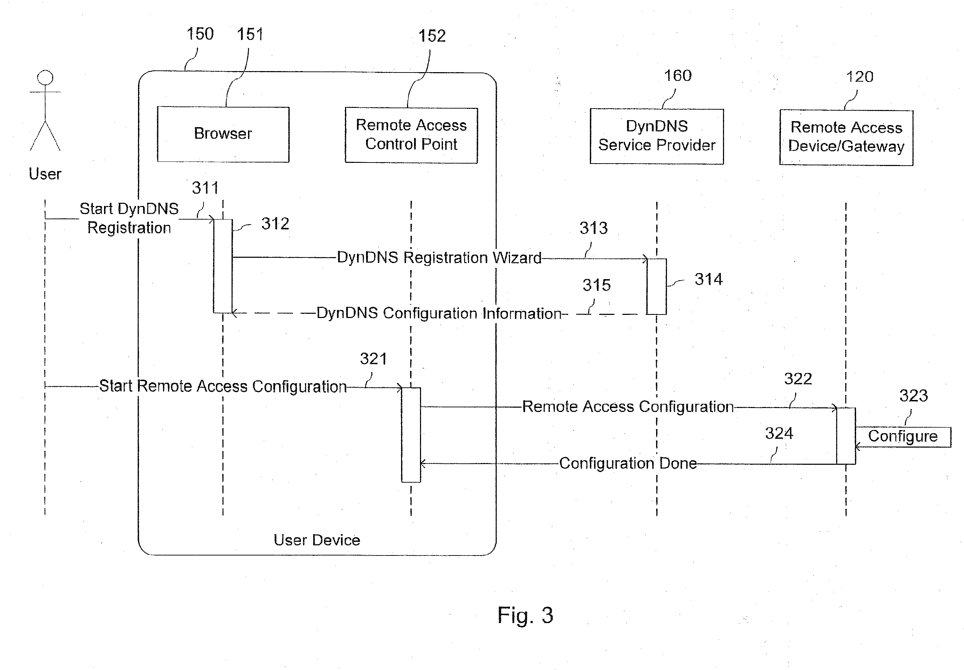

The operation in the system of Figure 1 for a DynDNS configuration by a user will be described in the following with reference to Figure 3. The DynDNS configuration may be used for instance for selecting or changing a domain name that is associated to the home network and that can be used as a Fully Qualified Domain Name for a remote access to the home network. Figure 3 illustrates the signal exchange between components of the system of Figure 1 for a DynDNS configuration.

Indicated in Figure 3 are a browser as an exemplary DynDNS configuration creation component 151 of the mobile terminal 150 and a remote access control point as an exemplary remote access control component 152 of the mobile terminal 150. The mobile terminal 150 is currently connected to the home network and may access the Internet 140 via the interface 124 and the communication component 125 of the home gateway 120. Indicated in Figure 3 are further the DynDNS server 160 and the gateway 120.

The user may start a DynDNS registration on the mobile terminal 150 for selecting a domain name for the home network (step 311) by accessing a selected DynDNS server 160 via the home gateway 120 using the browser 151.

The DNS configuration creation component 161 of the DynDNS server 160 provides thereupon a wizard that is started on the browser 151 (step 312). The wizard helps the user through the steps required for example to pickup a domain name. The entered information is provided by the wizard to the DNS configuration creation component 161 of the DynDNS server 160 (step 313).

Then, the DNS configuration creation component 161 of the DynDNS server 160 assembles DynDNS configuration information in the form of an XML file (step 314). The XML file contains the necessary information for a generic client to connect to this DynDNS server 160 and to update the DNS entry whenever the IP address of the gateway 120 has changed. The DynDNS configuration information may contain for instance the selected domain name, the URL (Uniform Resource Locator) where to update the service, a username and a password. Additionally, the configuration information can include a pointer to the DynDNS provider service level agreement and policies parameters specific to that particular service provider. Such policy parameters may include for example forced updates that have to be carried out to avoid DynDNS entries to expire.

The XML file may have for instance the following structure:

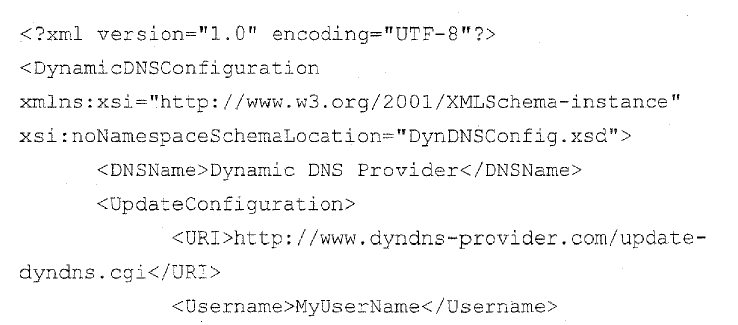

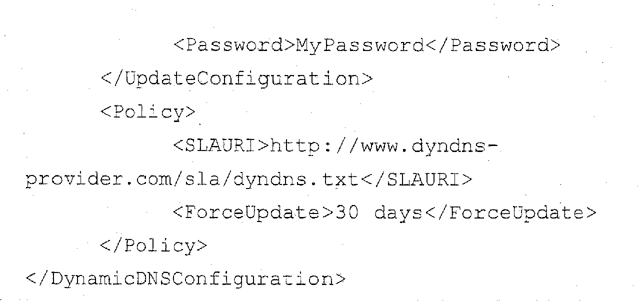

For completing the registration process, the mobile terminal 150 receives from the DynDNS server 160 the XML file containing the DynDNS update configuration information and, optionally, the policy configuration (315).

Thereafter, the user may start a remote access configuration (step 321). To this end, the user causes the remote access control component 152 to take care of the configuration.

The remote access control component 152 uses the received XML file to configure the remote access configuration component 121 of the home gateway 120 (steps 322, 323). When the remote access configuration is completed, a corresponding confirmation is provided by the remote access configuration component 121 to the remote access control component 152 (step 324).

The remote access configuration component 121 of the home gateway 120 is now able to update the DNS entry in the database 165 of the DynDNS server 160 whenever the external IP address is changing. If the operator of the DynDNS server 160 pursues the policy that a DNS entry expires if no activity has been noticed for a determined period of time, the home gateway 120 can also ensure that this will not happen, as it has knowledge about the expiration time from the DynDNS configuration in the XML file.

The mechanism described with reference to Figure 3 thus enables an end user to configure his/her remote access UPnP service with DynDNS parameters without having to be aware of the implementation specifics of the employed DynDNS service.

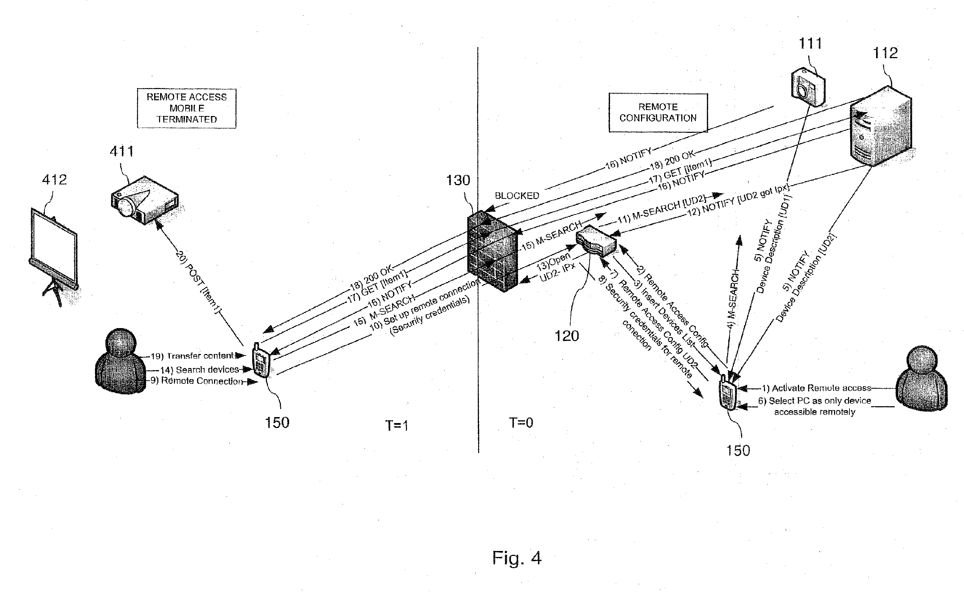

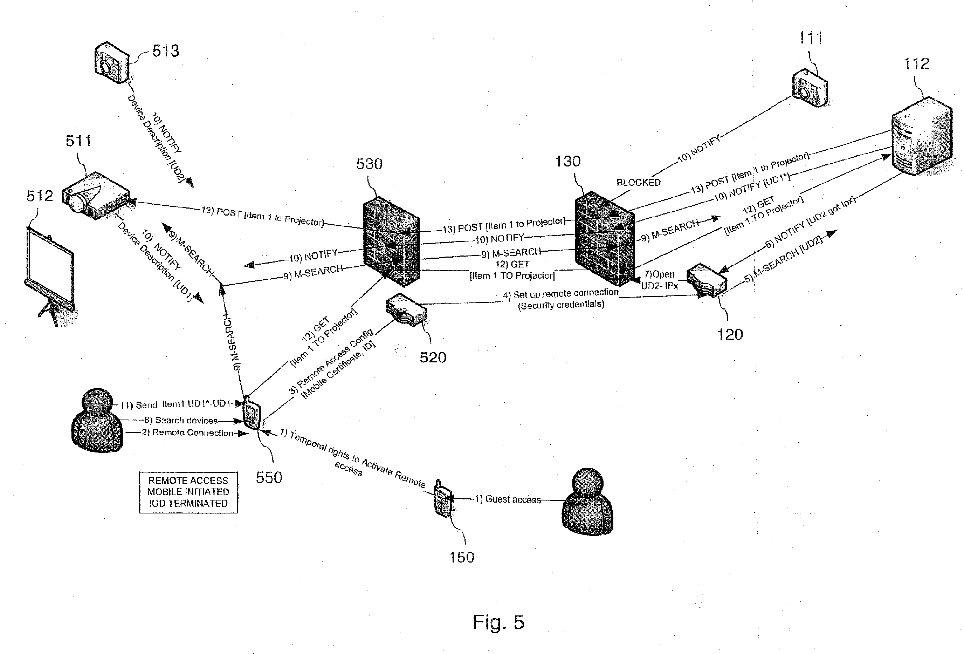

An operation in the system of Figure 1 for a further remote access configuration by a user will be described in the following with reference to Figures 4 and 5. Figure 4 presents messages that are exchanged in a first scenario, and Figure 5 presents messages that are exchanged in a second scenario. The remote access configuration component 122 of the home gateway 120 provides UPnP™ control point functionality for enabling the proxy functionality that will be described below.

Figure 4 presents operations performed at a first point in time T=0 and operations performed at a second point in time T=1.

At the first point in time, the mobile terminal 150 belongs to a home network, which includes as further devices 110 a camera 111 and a PC 112. In addition, the gateway 120 and the firewall 130 are depicted.

A user of the mobile terminal 150 requests activation of a remote access to the home network by a corresponding user input (message 1). The remote access control component 153 of the mobile terminal 150 initiates thereupon a remote access configuration with the remote access control component 122 of the gateway 120 (message 2). The initiation message may include for instance an identification (ID) of the mobile terminal 150 and a desired security policy.

The remote access control component 122 of the gateway 120 asks the mobile terminal 150 thereupon to insert a list of devices for which a remote access is to be enabled (message 3). The remote access control component 153 causes the mobile terminal 150 to broadcast an M-search message (message 4), and it receives in response a respective Notify message from the other devices 110 of the home network (messages 5). The Notify message 5 from the camera 111 comprises a device description including an identification 'UD1'. The Notify message 5 from the PC 112 comprises a device description including an identification 'UD2'. A list of the found devices 111, 112 is presented to the user.

The user may now select the PC 112 as the only device that is to be remotely accessible (message 6). The corresponding identification 'UD2' is provided by the remote access control component 153 of the mobile terminal 150 to the home gateway 120 (message 7). The remote access control component 122 of the home gateway 120 generates security credentials for a remote access and provides them to the mobile terminal 150 (message 8). The remote access control 153 stores these credentials in the storage 155 of the mobile terminal 150.

At the second point in time, the user would like to present an item stored in the PC 112 via a beamer 411 on a screen 412. The user and his/her mobile terminal 150, however, are not located in the range of the home network anymore. The user is only able to access the Internet 140 by means of the mobile terminal 150.

The user therefore asks the remote access control component 153 of the mobile terminal 150 to establish a remote connection to the home network (message 9). The remote access control component 153 sets up a remote connection to the home gateway 120 via the Internet 140 using the Full Qualified Domain Name of the home network. In this context, the remote access control component 153 also retrieves the security credentials from the storage 155 and transmits them together with an ID of the mobile terminal 150 to the home gateway 120 (message 10).

For establishing the connection, the DynDNS server 160 may map the provided domain name to the currently valid IP address of the gateway 120.

The remote access configuration component 122 of the home gateway 120 provides VPN/SSL and VPN/IPSEc tunneling functionality, in order to ensure a secure signal exchange between the remote mobile terminal 150 and the home gateway 120.

The remote access configuration component 122 checks the security credentials. In case it determines that the security credentials have been assigned to a mobile terminal 150 that is associated to the home network for a remote access, the remote access configuration component 122 causes the home gateway 120 to send out an M-search message (message 11) for all devices 111, 112 of the home network for which a remote access has been activated. In the present situation, this is only the PC 112 having the identification UD2. The remote access configuration component 122 receives in response a Notify message (message 12) from the PC 112 indicating 'UD2 got IPx'. Thereupon, the remote access configuration component 122 sends an 'Opens UD2 IPx' message to the firewall 130 (message 13). This ensures that the firewall 130 will let pass messages from the PC 112 to the Internet 130.

In a next step, the user causes the remote mobile terminal 150 to search for devices in the home network (message 14). The remote mobile terminal 150 transmits thereupon via the Internet 130 an M-search message (message 15) to the home gateway 120. The home gateway 120 broadcasts the received message 15 in the home network. The camera 111 and the PC 112 react with a respective Notify message (message 16). The Notify message 16 from the PC 112 is forwarded by the home gateway 120 via the firewall 130 to the remote mobile station 150. The Notify message 16 from the camera 111, in contrast, is blocked by the firewall 130.

The remote mobile terminal 150 asks the PC 112 thereupon with a Get message to provide Item 1 (message 17), which is forwarded by the home gateway 120 to the PC 112. The PC 112 answers with a '200 OK' message including the Item 1 (message 18), and this message 18 is forwarded by the gateway 120 via the Internet 140 to the remote mobile terminal 150.

The user is notified about the received Item 1, and may now initiate a transfer of the content to the projector 411 (message 19). The remote mobile terminal 150 sends Item 1 to the projector 411 in a Post message (message 20). The projector 411 may then present Item 1 on a screen 412.

Figure 5 proceeds from a situation in which a remote access to the home network has already been activated, as described with reference to Figure 4 for a first point in time.

A mobile terminal 150 is thus enabled to request a remote access to a PC 112 of a home network, which includes in addition a camera 111 and a home gateway 120, the home gateway 120 providing an access to the Internet 140 via a firewall 130.

The user of the mobile terminal 150 would now like to present an item stored in the PC 112 via a beamer 511 on a screen 512. The user and his/her mobile terminal 140, however, are not located in the range of the home network anymore. Further, the beamer 511 belongs to a visitor home network, to which the remote mobile terminal 150 has no direct access rights. The visitor home network comprises, in addition to the beamer 511, a camera 513 and a mobile terminal 550 of another user. Further, a visitor home gateway 520 enables an access to the Internet 130 via a firewall 530. The visitor home gateway 520 may be constructed in a similar way as the home gateway 120 of Figure 1.

The user of mobile terminal 150 causes the mobile terminal 150 to enable a guest access to the home network by providing the further mobile terminal 540 with temporal rights to activate a remote access to the home network (message 1). The message 1 comprises at least configuration settings, including for instance the domain name of the home gateway 120, and security information, including for instance an ID (Identification) of the mobile terminal 150 and the security credentials stored in the storage 155 of the mobile terminal 150. The assembly of the configuration settings and the security information in message 1 and the transmission of message 1 can be taken care of as well by the remote access control component 153 of the mobile device 150.

The user of the mobile terminal 540 requests the mobile terminal 540 to establish a remote connection to the home network (message 2). The mobile terminal 540 transmits thereupon a remote access configuration message including the configuration settings for configuring the visitor home gateway 520 and a mobile certificate with the security credentials and the ID of the mobile terminal 150 to the visitor home gateway 520 (message 3). The configuration causes the gateway 520 to contact the home gateway 120 for creating a tunnel bridging both local networks. If the visitor home gateway 520 is implemented just like the home gateway 120, the configuration and the caused contacting can be taken care of by a component corresponding to the remote access configuration component 122 of the home gateway 120.

The visitor home gateway 520 sets up via the Internet 140 a remote connection to the home gateway 120 (message 4). The information that is conveyed for setting up the connection includes the security credentials provided by the remote mobile terminal 150.

The remote access configuration component 122 checks the security credentials. In case it determines that the security credentials have been assigned to a mobile terminal 150 that is associated to the home network for a remote access, the remote access configuration component 122 causes the home gateway 120 to send out an M-search message for a device with an identification UD2, which is the only one for which a remote access is allowed for the particular mobile terminal 150 according to the remote access configuration (message 5). The remote access configuration component 122 receives in response a Notify message (message 6) from the PC 112 indicating 'UD2 got IPx'. Thereupon, the remote access configuration component 122 sends an 'Opens UD2 IPx' message to the firewall 130 (message 7). This ensures that the firewall 130 will let pass messages from the PC 112 to the Internet 140.

In a next step, the user of mobile terminal 540 causes the mobile terminal 540 to search for available devices (message 8). The mobile terminal 540 broadcasts thereupon an M-search message in the visitor home network and sends it in addition via the Internet 140 to the home network (messages 9). The home gateway 120 broadcasts the received message 9 in the home network.

In the visitor home network, the projector 511 and the camera 513 react with a respective Notify message (messages 10). The Notify message 10 from the projector 511 includes a device description with an identification UD1. The notify message 10 from the camera 513 includes a device description with an identification UD2.

In the home network, the camera 111 and the PC 112 react with a respective Notify message (messages 10). The Notify message 10 from the PC 112 includes an identification UD1*. It is forwarded by the home gateway 120 via the firewall 130, the Internet 140, the firewall 530 and the visitor home gateway 520 to the mobile station 540. The Notify message 10 from the camera 111, in contrast, is blocked by the firewall 130.

The mobile terminal 540 informs its user about the notified devices. The user of the mobile terminal 540 may request thereupon that Item 1 is sent from the PC 112 to the projector 511, that is, from the device with identification UD1* to the device with identification UD1 (message 11). The mobile terminal 540 asks the PC 112 thereupon with a Get message to provide Item 1 to the projector (message 12). The Get message is forwarded via the visitor home gateway 520, the firewall 530, the Internet 140, the firewall 130 and the home gateway 120. The PC 112 answers with a Post message including the Item 1 for the projector (message 13). This message 13 is forwarded by the home gateway 120 via the firewall 130, the Internet 140, the firewall 530 and the visitor home gateway 520 to the projector 511. Firewall 130 lets the Post message pass due to the carried out activation of the remote access specifically for the PC 112.

The projector 511 may now present Item 1 on a screen 512.

The mechanism described with reference to Figures 4 and 5 thus enables an end user to activate and use a remote access to a home network by means of a mobile terminal.

While there have been shown and described and pointed out fundamental novel features of the invention as applied to preferred embodiments thereof, it will be understood that various omissions and substitutions and changes in the form and details of the devices and methods described may be made by those skilled in the art without departing from the spirit of the invention. For example, it is expressly intended that all combinations of those elements and/or method steps which perform substantially the same function in substantially the same way to achieve the same results are within the scope of the invention. Moreover, it should be recognized that structures and/or elements and/or method steps shown and/or described in connection with any disclosed form or embodiment of the invention may be incorporated in any other disclosed or described or suggested form or embodiment as a general matter of design choice. It is the intention, therefore, to be limited only as indicated by the scope of the claims appended hereto.

## Claims

1. A method for enabling a remote access to a local network via a remote access device of said local network, said method comprising at said remote access device:
receiving from a mobile device of said local network configuration settings for a remote access to said local network; and
enabling a remote access to said local network via said remote access device using said configuration settings.

2. The method according to claim 1, wherein said remote access is enabled via an external internet protocol based network, and wherein said configuration settings comprise configuration information for a dynamic domain name service, said configuration information enabling said remote access device to update a domain name service entry in a dynamic domain name service server whenever an allocated external internet protocol address of said remote access device is changing.

3. The method according to claim 2, wherein a preceding step comprises at said mobile device obtaining said configuration information from said dynamic domain name service server.

4. The method according to claim 3, wherein a wizard is executed in said mobile device for supporting a user in requesting said configuration information from said dynamic domain name service server.

5. The method according to claim 3, wherein said obtained configuration information is included in an extended mark-up language file.

6. The method according to claim 2, wherein said configuration settings comprise in addition policy information of said dynamic domain name service server.

7. The method according to claim 1, wherein said configuration settings comprise at least one of:
settings for a registration of said remote access device at an external server;
settings for an activation of said remote access;
settings for a registration of said mobile device for said remote access;
a list of devices of said local network to which said remote access by said mobile device is to be enabled; and
settings for a security policy that is to be obeyed for said remote access.

8. The method according to claim 1, further comprising transmitting security credentials to said mobile device, said security credentials qualifying a device for said remote access.

9. The method according to claim 1, further comprising setting up a remote connection in accordance with received configuration settings between a device requesting a remote access and said local network.

10. The method according to claim 9, wherein said remote connection is only set up in case said request includes security credentials qualify said requesting device for a remote access.

11. The method according to claim 9, wherein said requesting device is one of said mobile device and a device authorized by said mobile device to request said remote access.

12. The method according to claim 9, wherein said requesting device is a device of another local network, said device being authorized by said mobile device to request said remote access.

13. The method according to claim 9, wherein said remote access device uses at least one of virtual private network / secure sockets layer tunneling and virtual private network / internet security tunneling for a remote connection.

14. The method according to claim 1, wherein said remote access device provides a filtering functionality preventing signals from devices of said local network, which devices are not registered for a remote access, from leaving said local network during a remote access.

15. A method for enabling a remote access to a local network via a remote access device of said local network, said method comprising at a mobile device of said local network assembling configuration settings for a remote access to said local network and providing said configuration settings to said remote access device.

16. A chipset for a remote access device enabling a remote access to a local network, said chipset comprising at least one chip, said at least one chip including a remote access configuration component,
said remote access configuration component being adapted to receive from a mobile device of said local network configuration settings for a remote access to said local network; and
said remote access configuration component being adapted to enable a remote access to said local network via said remote access device using said configuration settings.

17. A remote access device enabling a remote access to a local network, said remote access device comprising a remote access configuration component,
said remote access configuration component being adapted to receive from a mobile device of said local network configuration settings for a remote access to said local network; and
said remote access configuration component being adapted to enable a remote access to said local network via said remote access device using said configuration settings.

18. A chipset for a mobile device enabling a remote access to a local network via a remote access device of said local network, said chipset comprising at least one chip, said at least one chip including a remote access control component adapted to assemble configuration settings for a remote access to said local network and adapted to provide said configuration settings to said remote access device.

19. A mobile device enabling a remote access to a local network via a remote access device of said local network, said mobile device comprising a remote access control component adapted to assemble configuration settings for a remote access to said local network and adapted to provide said configuration settings to said remote access device.

20. A system enabling a remote access to a local network, said system comprising a remote access device of a local network and a mobile device,
said remote access device comprising a remote access configuration component adapted to receive from said mobile device configuration settings for a remote access to said local network and adapted to enable a remote access to said local network via said remote access device using said configuration settings; and
said mobile device comprising a remote access control component adapted to provide said remote access device with configuration settings for a remote access to said local network.

21. A software program product in which a software code for enabling a remote access to a local network via a remote access device of said local network is stored in a readable medium, said software code realizing the following steps when executed by a processor of said remote access device:
receiving from a mobile device of said local network configuration settings for a remote access to said local network; and
enabling a remote access to said local network via said remote access device using said configuration settings.

22. A software program product in which a software code for enabling a remote access to a local network via a remote access device of said local network is stored in a readable medium, said software code realizing the following steps when executed by a processor of a mobile device of said local network:
assembling configuration settings for a remote access to said local network; and
providing said configuration settings to said remote access device.

23. A method for supporting a configuration of a dynamic domain name system service at a remote access device of a local area network, said method comprising at a mobile device:
obtaining dynamic domain name system configuration information from a dynamic domain name system server; and
providing said configuration information as an input for a configuration of a dynamic domain name system service at said remote access device.

24. A mobile device supporting a configuration of a dynamic domain name system service at a remote access device of a local area network, said mobile device comprising:
a configuration creation component adapted to obtain dynamic domain name system configuration information from a dynamic domain name system server; and
a remote access control component adapted to provide said configuration information as an input for a configuration of a dynamic domain name system service at said remote access device.

25. A dynamic domain name service server supporting a configuration of a dynamic domain name system service at a remote access device of a local area network, wherein said dynamic domain name service server comprises a configuration creation component,
said configuration creation component being adapted to assemble dynamic domain name system configuration information for said remote access device upon a request by a mobile device; and
said configuration creation component being adapted to provide said assembled dynamic domain name system configuration information to said mobile device.

26. A remote access device enabling a remote access to a local network, said remote access device supporting a configuration of a dynamic domain name system service at said remote access device, said remote access device comprising a configuration creation component,
said configuration creation component being adapted to obtain dynamic domain name system configuration information from a mobile device of said local network; and
said configuration creation component being adapted to carry out a configuration of a dynamic domain name system service at said remote access device based on said obtained dynamic domain name system configuration information.

27. A system comprising a remote access device of a local area network and a mobile device supporting a configuration of a dynamic domain name system service at said remote access device, said mobile device comprising:
a configuration creation component adapted to obtain dynamic domain name system configuration information from a dynamic domain name system server; and
a remote access control component adapted to provide said configuration information as an input for a configuration of a dynamic domain name system service at said remote access device.

28. A software program product in which a software code for supporting a configuration of a dynamic domain name system service at a remote access device of a local area network is stored in a readable medium, said software code realizing the following steps when executed by a processor of a mobile device of said local network:
obtaining dynamic domain name system configuration information from a dynamic domain name system server; and
providing said configuration information as an input for a configuration of a dynamic domain name system service at said remote access device.

29. A method for enabling a remote access to a first local network, said method comprising at a remote access device of a second local network:
receiving configuration settings from a mobile device that is associated to said first local network; and
setting-up a connection to a remote access device of said first local network using said configuration settings.

30. A remote access device of a first local network enabling a remote access to a second local network, said remote access device of said first local network comprising a remote access configuration component,
said remote access configuration component being adapted to receive from a mobile device associated to said second local network configuration settings; and
said remote access configuration component being adapted to enable a set-up of a connection to a remote device of said second local network using said configuration settings.

31. A mobile device enabling a remote access to a first local network, said mobile device being associated to said first local network and said mobile device comprising a remote access control component adapted to assemble configuration settings enabling a remote access device of a second local network to set-up a connection to a remote access device of said first local network and adapted to provide said configuration settings to a remote access device of a second local network.

32. A system enabling a remote access to a first local network, said system comprising a remote access device of a second local network and a mobile device,
said remote access device of said second local network comprising a remote access configuration component adapted to receive from said mobile device configuration settings, and adapted to enable a set-up of a connection to a remote device of said first local network using said configuration settings; and
said mobile device being associated to said first local network and comprising a remote access control component adapted to provide configuration settings for a remote access to said first local network to said remote access device of said second local network.

33. A system enabling a remote access to a first local network, said system comprising a remote access device of said first local network and a remote access device of a second local network,
said remote access device of said second local network comprising a remote access configuration component adapted to receive from a mobile device associated to said first local network configuration settings, and adapted to enable a set-up of a connection to a remote device of said first local network using said configuration settings.

34. A software program product in which a software code for enabling a remote access to a first local network is stored in a readable medium, said software code realizing the following steps when executed by a processor of a remote access device of a second local network:
receiving configuration settings from a mobile device that is associated to said first local network; and
setting-up a connection to a remote access device of said first local network using said configuration settings.
